# EUROPÄISCHE PATENTANMELDUNG

(11) **EP 2 710 912 A1**
(43) Veröffentlichungstag der Anmeldung: **26.03.2014**
(21) Anmeldenummer: 13185729.4
(22) Anmeldetag: 24.09.2013
(51) Int. Cl.: A43B 13/41, B29D 35/12

(54) **Verfahren zur Herstellung einer kombinierten Brandsohle**

(30) Priorität: 24.09.2012 AT 504082012
(71) Anmelder: Wieser, Josef, 1160 Wien (AT)
(72) Erfinder: Wieser, Josef, 1160 Wien (AT)
(74) Vertreter: Burgstaller, Peter

(57) **Zusammenfassung**

Die Erfindung betrifft ein Verfahren zur Herstellung einer kombinierten Brandsohle für einen Schuh, sowie die durch dieses Verfahren erzeugte kombinierte Brandsohle. Die kombinierte Brandsohle wird aus einer Sohle 3 und einem im Spritzgussverfahren produzierten Gelenkstück 1 aus Kunststoff gebildet. Das Gelenkstück 1 wird im ausgehärteten, kalten Zustand mit der Sohle 3 verbunden. Zur Erhöhung der Stabilität und Steifigkeit kann eine Gelenkfeder 2 in den Aufbau integriert werden.

## Beschreibung

Die Erfindung betrifft ein Verfahren zur Herstellung einer kombinierten Brandsohle für einen Schuh, bestehend aus einem Gelenkstück aus Spritzgussmaterial, einer Sohle und vorzugsweise einer Gelenkfeder und die nach diesem Verfahren hergestellte kombinierte Brandsohle.

Als Brandsohle bezeichnet man die zum Fuß hin weisende Schicht des Schuhbodens, also gemeinhin die Innensohle. Weil an der Brandsohle bei den meisten Macharten einerseits das Schuhoberteil (der Schaft) und andererseits der weitere Schuhboden (Zwischen-, Laufsohle und Absatz) befestigt sind, gilt sie als das Fundament des Schuhs, verleiht ihm Stabilität, Passformerhalt und ist auch für die Haltbarkeit und den Tragekomfort eminent wichtig. Um der Brandsohle eine spezielle Form und die erforderliche Stabilität zu geben, wird eine flexible Sohle mit einem starren Gelenkstück versehen. Zur Erhöhung der Stabilität kann es nötig sein eine Gelenkfeder aus steiferem und stabilerem Materiale in den Aufbau zu integrieren.

Die DE 8027250 U1 zeigt eine Fertigbrandsohle, insbesondere für einen Damenschuh mit hohen Absätzen. Die Fertigbrandsohle wird gebildet aus einer Sohle und einer Gelenkfeder, sowie einer optionalen Abdeckung, welche durch eine Kunststoffschicht fest verbunden werden. Die Herstellung erfolgt in folgenden Schritten:
- In die Sohle werden zwei U-förmiger Schlitze eingestanzt, wodurch zwei Lappen gebildet werden.
- Die Gelenkfeder wird provisorisch an den beiden Lappen der Sohle befestigt, indem die Lappen durch zwei Löcher in der Gelenkfeder gesteckt werden.
- Wenn gewünscht wird eine Abdeckung auf den Boden einer Spritzgussform eingelegt.
- Positionieren der Sohle und der Gelenkfeder in der Spritzgussform, wobei die Gelenkfeder und die Sohle durch zwei Haltestifte in Position gehalten werden.
- Einspritzen des heißen, flüssigen Kunststoffs in die Spritzgussform in den Hohlraum zwischen Sohle und der Abdeckung, beziehungsweise dem Boden der Spritzgussform.

Die DE 2952591 A1 zeigt eine Fertigbrandsohle, welche aus einer speziell eingeschnittenen Folie, bestehend aus Zellulosepapier, Leder, Kunststoffmaterial oder dergleichen gebildet wird, indem sie in einer Pressform vorübergehend durch Haltestifte fixiert wird und durch Einspritzen von Kunststoffmaterial in Verbindung mit diesem endgültig stabilisiert wird. Um die Fertigbrandsohle zusätzlich zu versteifen, kann das Einlegen eines zusätzlichen Metallstreifens in die Pressform vor Einspritzen des Kunststoffs erfolgen.

Die DE 1902371 A zeigt eine Fertigbrandsohle, welche aus einer Sohle aus Leder, Texon (markengeschützter Name für ein spezielles Zellulosematerial) oder vergleichbarem Material und einer Stahlfeder gebildet wird, indem diese in eine Spritzgussform eingelegt werden und durch Einspritzen von Kunststoff dauerhaft miteinander verbunden werden. Die Sohle wird dabei in einem Winkel von 20 Grad entlang einer geschlossenen Linie so angeschnitten, dass diese beim Einspritzen des Kunststoffs etwas einreißt, wodurch Kunststoff in diesen Rissbereich eindringt und die so gebildete, gehobene Fläche der Sohle unterspritzt.

Die DE 202006000454 U1 zeigt einen Einlegesohlenaufbau für hochhackige Schuhe. Dieser besteht aus einem Aufbauelement welches im Mittelfußabschnitt und im Fersenabschnitt in eine obere und untere Schicht aufgeteilt ist, wodurch dazwischen ein Hohlraum gebildet wird. Im Hohlraum zwischen diesen Schichten wird ein starres Trägerelement platziert. Durch Einspritzen von Kunststoff wird der Hohlraum gefüllt und somit das Aufbauelement und das starre Trägerelement dauerhaft verbunden.

Ferner von Bedeutung sind die DD 283924 A5 und die DE 1529979 A, welche einen anderen Ansatz zur Schuhherstellung zeigen. Dabei wird der gesamte Schuh in einer Spritzgussform zusammengestellt und durch Einspritzen des Kunststoffs werden sowohl die einzelnen Teile miteinander verbunden, als auch die Laufsohle des Schuhs geformt. Die DE 1529979 zeigt dabei die Herstellung eines hochhackigen Damenschuhs, wobei auch eine Gelenkfeder eingebaut wird. Diese wird beim Spritzgussvorgang durch Magnete in der gewünschten Position im Schuh gehalten.

Zur Herstellung von Schuhen, Einlegesohlen, sowie von Fertigbrandsohlen kommt schon seit langem Spritzgusstechnologie zum Einsatz. Speziell bei Schuhen mit Absatz, insbesondere bei hochhackigen Damenschuhen, ist es notwendig ein Gelenkstück samt Gelenkfeder in den Schuhaufbau zu integrieren. In den, gemäß dem Stand der Technik, eingesetzten Verfahren werden zumindest die Sohle (Brandsohle) und die Gelenkfeder in eine Gussform platziert und durch geeignete Vorrichtungen in Position gehalten. Durch Einspritzen des flüssigen, heißen Kunststoffs in die Gussform werden das Gelenkstück und die Sohle dauerhaft verbunden, wobei der eingespritzte Kunststoff das Gelenkstück bildet. Dieses Verfahren hat sich in der Schuhindustrie an sich bewährt und findet bei der Massenfertigung von Fertigbrandsohlen Anwendung, jedoch bringt der Fertigungsvorgang einen entscheidenden Nachteil mit sich. Dieser soll nun erläutert werden, um die große Bedeutung dieser Erfindung für die Schuhindustrie zu verdeutlichen.

Als Gelenkfeder wird in der Regel ein länglicher Profilstahl, welcher exakt an die Leistensprengung angepasst ist, verwendet. Dieser erstreckt sich im Schuh vom Bereich der Ferse bis zum Beginn der Ballenregion. Wird bei der Fertigung die Gelenkfeder in der Spritzgussform durch den flüssigen, heißen Kunststoff umhüllt, erhitzt sich diese. Beim Abkühlen des so gefertigten Gelenkstücks gibt die metallische Feder die gespeicherte Wärme nur langsam ab, was dazu führt, dass die Kunststoffschmelze im Bereich nahe der Gelenkfeder langsamer aushärtet als in weiter von der Gelenkfeder entfernten Bereichen. Durch diese unregelmäßige Aushärtung kommt es zu Abweichungen und Verwindung bei Form und Qualität der derart gefertigten Brandsohlen. Diese Abweichungen können zwar gering ausfallen, haben aber speziell bei der Weiterverarbeitung zu fertigen Schuhen in der Massenfertigung mitunter äußerst unangenehme Folgen. Diese Folgen können bei der Herstellung von Schuhen zu unterschiedlicher Qualität, Produktion von Ausschuss bis hin zu Maschinenfehlern und damit verbundenen Produktionsausfällen führen.

Weitere Nachteile des bekannten Verfahrens sind erstens, dass sich die Eigenschaften, wie Form, Festigkeit oder Bruchfestigkeit der Gelenkfeder beim Erhitzen ändern können, was Einschränkungen für die Materialwahl und Ausgestaltung der Gelenkfeder bedeutet.

Zweitens kann es bei der Positionierung der Gelenkfeder in der Gussform zu Abweichungen ihrer Lage kommen. Um dies weitgehend zu vermeiden, werden in der Regel Haltestifte in die Spritzgussform integriert, welche die Gelenkfeder in ihrer Position fixieren.

Drittens kommt es, bei der Herstellung einer Brandsohle als Einheit aus Sohle, Gelenkstück und Gelenkfeder nach dem eingangs beschriebenen Verfahren nach dem Stand der Technik, durch die unregelmäßige Aushärtung der Kunststoffschmelze, zu einer unerwünschten Verformung des Sohlenmaterials. Bei der Verwendung von Texon als Sohlenmaterial ist diese beispielsweise in Form von welligen Verwerfungen auf der Oberseite, also der dem Fuß zugewandten Seite sicht- und spürbar.

Viertens, wenn die Sohle zusätzlich mit einem Weichtritt aus geschäumten Material im Vorfuß ausgestattet ist, was grundsätzlich der Komforterhöhung dient, dann können diese Schäume beim Einspritzverfahren durch Druck und Temperatur die ihnen zugedachte Funktion teilweise oder zur Gänze verlieren.

Ausgehend von diesem Stand der Technik soll ein Verfahren entwickelt werden, das den Vorteil der kostengünstigen Massenfertigung von Schuhteilen durch Spritzgussverfahren nutzt und gleichzeitig die beschriebenen nachteiligen Folgen vermeidet, d.h. es soll eine 100%ige Wiederholgenauigkeit der fertigen Brandsohle erreicht werden.

Erfindungsgemäß wird vorgesehen im ersten Schritt das Gelenkstück im Spritzgussverfahren, ohne vorheriges Einlegen der Sohle bzw. einer Gelenkfeder in die Spritzgussform, zu fertigen. Dadurch härtet die Kunststoffschmelze gleichmäßig aus, was dazu führt, dass völlig idente Gelenkstücke gefertigt werden und selbst geringste Abweichungen vermieden werden.

Im zweiten Schritt wird vorzugsweise die Gelenkfeder in exakter Position auf das Gelenkstück aufgelegt, beziehungsweise eingelegt und mit diesem verbunden. Wenn bei der Herstellung der Spritzgussform für das Gelenkstück die Unterseite des Profils der Gelenkfeder bereits berücksichtigt wird und somit das exakte Gegenstück darstellt, dann ergibt sich bereits beim Einsetzen der Gelenkfeder in das Gelenkstück eine exakte Verbindung, welche jede Möglichkeit von Verwindung oder Verbiegung nahezu ausschließt.

Wenn diese Ausnehmung bereits in ausreichender Tiefe im Kunststoffgelenk vorgesehen ist, dann ist die Einbettung so exakt, dass der umgebende Kunststoff die Oberseite des Gelenkstücks nicht überragt. Eine dauerhafte Verbindung kann beispielsweise dadurch erreicht werden, dass das Gelenkstück und die Gelenkfeder zumindest ein, vorzugsweise zwei deckungsgleiche Rundlöcher aufweisen, durch welche die beiden Teile vernietet werden. Eine zusätzliche Verklebung ist eine weitere Option der Verbindung, wobei auch nur die reine Verklebung angedacht werden kann.

Im dritten Schritt wird die Kombination aus Gelenkstück und Gelenkfeder mit der Sohle verbunden, insbesondere verklebt. Denkbar ist es auch das Verfahren dahingehend zu vereinfachen, dass Schritt 2 und 3 kombiniert werden und damit Gelenkstück, Gelenkfeder und Sohle in einem Schritt zusammen geklebt werden. Der zweite Schritt entfällt auch, wenn auf den Einsatz einer Gelenkfeder verzichtet werden kann. Durch einen abschließenden kurzen Pressvorgang, welcher nur mit geringem Druck und kurzer Presszeit erfolgt, ist die dauerhafte Verbindung hergestellt. Bei richtiger Produktionsanordnung erfolgt Verklebung und Pressung durch eine Person in einem kontinuierlichen Ablauf.

Bei der Formgebung und der Materialwahl weist das erfindungsgemäße Verfahren höchste Flexibilität auf. Daher kann eine kombinierte Brandsohle für jede Art von Schuh und für alle Absatzhöhen erzeugt werden. Das Gelenkstück kann durch jeden im Spritzgussverfahren einsetzbaren Kunststoff gebildet werden. Durch entsprechende Gestaltung der Spritzgussform können so beispielsweise Gelenkstücke für hochhackige Damenschuhe aber auch für Herrenschuhe mit niedrigem Absatz gefertigt werden. Je nach Anforderung an die Stabilität und Festigkeit der kombinierten Brandsohle kann darauf verzichtet werden eine Gelenkfeder ein zu setzen. In diesem Fall wird im Gelenkstück keine Vertiefung vorgesehen.

Die Gelenkfeder wird üblicherweise aus Stahl gefertigt, kann aber auch aus Kunststoff, Fiberglas oder jedem anderen denkbaren Material gebildet werden. Im einfachsten Fall hat die Gelenkfeder eine längliche, annähernd rechteckige Form. Diese kann aber auch gegabelt, rundlich oder ringförmig sein oder solche Abschnitte aufweisen. Verwendet man statt der Gelenkfeder aus Stahl eine Versteifung aus einem nicht metallischen Material wie z.B. Fiber oder Carbon o.a. und verklebt diese ausschließlich, kann man so eine metallfreie Brandsohle herstellen.

Die Sohle kann einteilig oder aus mehreren Teilen gebildet sein. Dabei kann sie aus einem Material oder aus einer Kombination von verschiedenen Materialien bestehen. Diese Materialien umfassen Leder, Kunststoffe, Schaumstoffe und Zellulosematerialien wie Texon.

Das erfindungsgemäße Verfahren und eine nach dem erfindungsgemäßen Verfahren gefertigte Fertigbrandsohle weist gleich mehrere Vorteile gegenüber dem Stand der Technik auf.
- Es werden völlig idente Gelenkstücke und in weiterer Folge völlig idente kombinierte Brandsohlen hergestellt.
- Das Spritzgussverfahren wird vereinfacht, da weder die Gelenkfeder noch die Sohle in die Spritzgussform eingelegt werden und somit keine Haltestifte oder dergleichen zur exakten Positionierung dieser benötigt werden. Dadurch können einfachere und somit günstigere Spritzgussformen verwendet werden. Zusätzlich kann der Durchsatz erhöht werden, da der Vorgang des Einlegens wegfällt und die Gelenkstücke schneller auskühlen und somit die Spritzgussform schneller verlassen können. Das ergibt ein rationelleres, kostengünstigeres (diese Spritzgussteile bedürfen keines Bedienungspersonals) und exakteres Produktionsverfahren.
- Die obere, dem Fuß zugwandte Seite der Brandsohle ist glatt, da es beim Verbinden durch Kleben zu keiner Verformung in Form von welligen Verwerfungen kommt.
- Da die Gelenkfeder nicht erhitzt wird, gibt es diesbezüglich keine Einschränkung bei der Materialwahl und der Formgebung.
- Sämtliche in der Sohle bereits eingebauten Materialien behalten ihre ursprünglichen Eigenschaften, weil diese weder Temperatur noch übermäßigem Druck ausgesetzt werden.

Der Anmelder hat festgestellt, dass auch bei einer weniger vorteilhaften Ausgestaltung des erfindungsgemäßen Verfahrens, immer noch bessere Resultate erzielt werden, als nach den Verfahren des Stands der Technik. Bei dieser Variante ist es vorgesehen die Gelenkfeder bereits vor der Herstellung des Gelenkstücks in die Spritzgussform ein zu legen, unter Inkaufnahme der damit verbundenen, unvermeidbaren Nachteile. Im Unterschied zum Stand der Technik wird die so hergestellte Einheit aus Gelenkstück und Gelenkfeder erst im kalten, erhärteten Zustand mit der Sohle verbunden und nicht bereits in der Spritzgussform. Vorteilhaft gegenüber dem Stand der Technik ist weiterhin, dass die obere, dem Fuß zugwandte Seite der Brandsohle glatt ist, da es beim Verbinden durch Kleben zu keiner Verformung in Form von welligen Verwerfungen kommt und sämtliche in der Sohle verarbeiteten Materialien ihre ursprünglichen Eigenschaften beibehalten, da diese weder übermäßiger Temperatur noch Druck ausgesetzt werden. Die weiter oben beschriebenen negativen Effekte auf die Eigenschaften der Gelenkfeder durch die rasche Erhitzung, können etwas abgeschwächt werden, wenn die Gelenkfeder bereits im vorerhitzten Zustand in die Spritzgussform eingelegt wird. Die negativen Effekte auf das Gelenkstück, hervorgerufen durch die langsamer abkühlende Gelenkfeder, können durch Verwendung von Materialien (für Gelenkfeder und Gelenkstück) mit ähnlichen Eigenschaften hinsichtlich Wärmeleitung und Wärmespeicherung abgeschwächt werden. Denkbar ist es auch der Gelenkfeder gezielt Wärme zu entziehen, zum Beispiel durch in Kontakt bringen mit einer Kühlfläche, oder die von der Gelenkfeder weiter entfernt liegenden Bereiche des Gelenkstücks durch einbringen von Wärme langsamer abkühlen zu lassen, um so ein gleichmäßiges Abkühlen und Erhärten des Spritzgussmaterial des Gelenkstücks zu erreichen.

Eine beispielhafte, besonders vorteilhafte Ausführungsform der Erfindung wird an Hand von Zeichnungen erläutert, ohne dass damit eine Beschränkung des beanspruchten Schutzes verbunden ist.

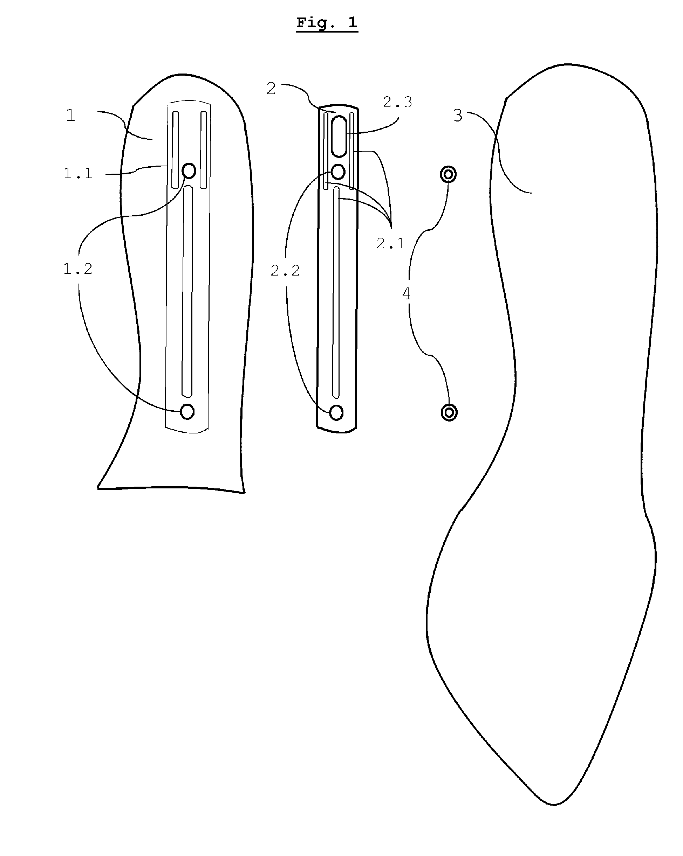

Fig. 1: zeigt eine Explosionsdarstellung der Fertigbrandsohle in Ansicht von oben

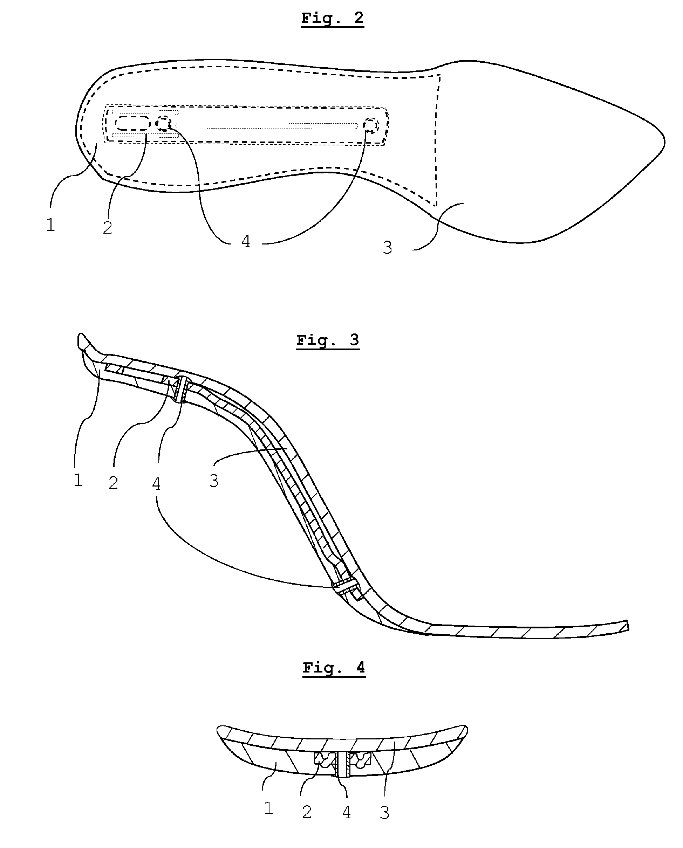

Fig. 2: Zeigt die zusammengesetzte Fertigbrandsohle von Fig. 1 in Ansicht von oben
Fig. 3: zeigt einen Längsschnitt der Fertigbrandsohle von Fig. 2, welcher durch die Mitte der Gelenkfeder verläuft.
Fig. 4: zeigt einen Querschnitt der Fertigbrandsohle von Fig. 2, welcher durch die Niete im Fersenbereich der Fertigrandsohle verläuft.

Die bespielhafte Ausführung ist eine kombinierte Brandsohle für einen hochhackigen Damenschuh und umfasst ein Gelenkstück 1, eine Gelenkfeder 2, eine Sohle 3 und zwei Nieten 4.

Das im Spritzgussverfahren erzeugte Gelenkstück 1 weist in Querrichtung eine konvex-konkave Form auf, wobei die dem Fuß zugewandte Seite (Oberseite), also jene Seite in die die Gelenkfeder 2 eingelegt wird und die mit der Brandsohle 3 verklebt wird, konkav ausgebildet ist und jene dem Fuß abgewandte Seite konvex. In Längsrichtung weist das Gelenkstück 1 eine geschwungene Kontur auf, welche vom Ballenbereich des Fußes nach hinten Richtung Ferse ansteigt. Diese Kontur entspricht exakt dem Leisten in diesem Bereich. Im vorderen Endbereich also im Ballenbereich nimmt die Querschnittsfläche des Gelenkstücks 1 kontinuierlich ab, sodass sie am Ende eine Linie darstellt.

In der Oberseite des Gelenkstücks 1 befindet sich zirka mittig eine längliche, annähernd rechteckige Vertiefung 1.1. Diese Vertiefung 1.1 weist drei zusätzlich vertiefte Bereiche auf, welche beim Zusammenbau die drei länglichen Erhebungen 2.1 der Gelenkfeder 2 aufnehmen. Das Gelenkstück 1 ist jeweils im Endbereich der Vertiefung 1.1 mittig mit zwei Rundlöchern 1.2 durchbrochen, welche der Durchführung der Nieten dienen.

Die Gelenkfeder 2 besteht aus einem ca. 10-15cm langen, ca. 1,5 cm breiten Profilband aus Stahl und weist in Längsrichtung dieselbe geschwungene Kontur auf, wie das Gelenkstück 1. Um ihre Festigkeit zu erhöhen, wird die Gelenkfeder 2 an drei Stellen in Längsrichtung eingekerbt, einerseits in ihrer Mitte zwischen den Rundlöchern 2.2, andererseits links und rechts neben dem hinteren Rundloch und dem Langloch 2.3. Durch das Einkerben entstehen drei Versteifungssicken, die auf der Unterseite der Gelenkfeder 2 drei längliche Erhebungen 2.1 bilden, auf der Oberseite naturgemäß drei Rillen. Am hinteren Ende, also im Fersenbereich der Gelenkfeder 2 befindet sich ein Langloch 2.3. Durch dieses Langloch 2.3 kann beim Schuhzusammenbau der Absatz fixiert werden. Die Gelenkfeder 2 weist zwei Rundlöcher 2.2 auf, die sich nach Einlegen der Gelenkfeder 2 in das Gelenkstück 1 deckungsgleich über den Rundlöchern 1.2 des Gelenkstücks 1 befinden. Durch die Rundlöcher 1.2 und 2.2 werden die beiden Teile durch zwei Niete 4, insbesondere Hohlniete dauerhaft verbunden. Die Vertiefung 1.1 des Gelenkstücks 1 ist so geformt, dass die gesamte Gelenkfeder 2 in ihr Platz findet und zwar so, dass die Oberseite der Gelenkfeder 2 und die, die Vertiefung 1.1 umgebende, Oberfläche des Gelenkstücks 1 zueinander bündig liegen.

Die Sohle 3 ist ein flacher, vorgefertigter Teil, der aus Zellulosematerial wie Texon, Leder oder Kunststoff bestehen kann, oder einer Kombination dieser Materialien. Die Sohle 3 reicht von der Schuhspitze bis zur Ferse. Beispielsweise wird die gesamte Sohle 3 aus einer Lage Texon ausgestanzt, einem Stück Leder ausgeschnitten, oder sie besteht aus zwei Teilstücken Texon, wobei das erste den Zehen und Ballenbereich bildet und mit einer dünnen Schaumstoffschicht bedeckt ist und das zweite Teilstück mit dem ersten im Ballenbereich verklebt ist und bis zur Ferse reicht.

Die Sohle 3 wird mit der Einheit aus Gelenkstück 1 und Gelenkfeder 2 verklebt. Dadurch nimmt die Sohle 3 im Bereich vom Ballen bis zur Ferse die Form des Gelenkstücks 1 an, ist also in Längsrichtung geschwungen und in Querrichtung konkav geformt. Im vorderen Bereich, also von den Zehen bis zu den Ballen, behält die Sohle 3 ihre flache, ebene Form. Durch den anschließenden Pressvorgang wird die gesamte kombinierte Brandsohle in allen Bereichen der Leistenkontur angepasst, auch im Vorfußbereich.

Die so hergestellte kombinierte Brandsohle aus Sohle 3, Gelenkstück 1 und Gelenkfeder 2 bildet gemeinsam mit dem Absatz das formgebende Element des zu fertigenden Schuhs. Nach obenhin bildet die kombinierte Brandsohle die Innensohle des Schuhs und kann über den ganzen Bereich oder einen Teilbereich mit einer Decksohle versehen werden, um den Tragekomfort des Schuhs zu erhöhen. An der Unterseite der kombinierten Brandsohle wird beim Schuhzusammenbau die Laufsohle montiert.

Nach dem gegenständlichen Verfahren können kombinierte Brandsohlen für Herrenschuhe und Damenschuhe unterschiedlichster Machart und mit allen Absatzhöhen hergestellt werden. Abhängig von der Machart und der Absatzhöhe muss eine Gelenkfeder vorgesehen werden, bzw. kann auf diese verzichtet werden.

## Patentansprüche

1. Verfahren zur Herstellung einer kombinierten Brandsohle, bestehend aus einer Sohle (3) und einem Gelenkstück (1), **dadurch gekennzeichnet, dass**
das Gelenkstück (1) im Spritzgussverfahren gefertigt wird und im ausgehärteten, kalten Zustand mit der Sohle (3) verbunden wird.

2. Verfahren nach Anspruch 1, **dadurch gekennzeichnet, dass** das Gelenkstück (1) und die Sohle (3) durch Kleben bei Raumtemperatur dauerhaft verbunden werden.

3. Verfahren nach Anspruch 1, **dadurch gekennzeichnet, dass** eine Gelenkfeder (2) als Versteifungselement integriert wird, wobei das Gelenkstück (1) im ausgehärteten, kalten Zustand mit der Gelenkfeder (2) und der Sohle (3) verbunden wird.

4. Verfahren nach Anspruch 3, **dadurch gekennzeichnet, dass** das Gelenkstück (1) und die Gelenkfeder (2) durch Niete (4) verbunden werden.

5. Verfahren nach Anspruch 4, **dadurch gekennzeichnet, dass** das Gelenkstück (1) samt der Gelenkfeder (2) durch Kleben bei Raumtemperatut mit der Sohle (3) verbunden wird.

6. Verfahren nach Anspruch 3, **dadurch gekennzeichnet, dass** das Gelenkstück (1) mit der Gelenkfeder (2) und der Sohle (3) bei Raumtemperatur verklebt wird.

7. Verfahren nach einem der Ansprüche 3 bis 6, **dadurch gekennzeichnet, dass** die Spritzgussform zur Herstellung des Gelenkstücks (1) eine Erhebung in Form der Unterseite der Gelenkfeder (2) aufweist, zur Ausbildung einer Vertiefung (1.1) im Gelenkstück (1), sodass diese Vertiefung (1.1) ein exaktes Gegenstück zur Unterseite der Gelenkfeder (2) darstellt.

8. Verfahren nach Anspruch 7, **dadurch gekennzeichnet, dass** im Gelenkstück (1) eine Vertiefung (1.1) gebildet wird, deren Tiefe der Dicke der Gelenkfeder (2) entspricht.

9. Verfahren nach einem der Ansprüche 7 bis 8, **dadurch gekennzeichnet, dass** sich die Vertiefung (1.1) auf der Oberseite des Gelenkstücks (1) befindet.

10. Verfahren zur Herstellung einer kombinierten Brandsohle, bestehend aus einer Sohle (3), einem Gelenkstück (1) und einer Gelenkfeder (2)
**dadurch gekennzeichnet, dass**
die Gelenkfeder (2), durch Einlegen in die Spritzgussform bereits im Spritzgussverfahren mit dem Gelenkstück (1) verbunden wird und die Einheit aus Gelenkstück (1) und Gelenkfeder (2) im ausgehärteten, kalten Zustand mit der Sohle (3) verbunden wird.

11. Verfahren nach Anspruch 10, **dadurch gekennzeichnet, dass** die Gelenkfeder (2) vor dem Einlegen in die Spritzgussform erhitzt wird.

12. Verfahren nach einem der Ansprüche 10 bis 11, **dadurch gekennzeichnet, dass** Gelenkfeder (2) aus einem Material gebildet ist, dass ähnliche Wärmeleit- und Wärmespeichereigenschaften besitzt wie das für den Spritzguss verwendete Material.

13. Verfahren nach einem der Ansprüche 10 bis 12, **dadurch gekennzeichnet, dass** der Gelenkfeder (1) beim Abkühlen zusätzlich Wärmeenergie entzogen wird.

14. Verfahren nach einem der Ansprüche 10 bis 13, **dadurch gekennzeichnet, dass** dem Gelenkstück (1) während des Abkühlens Wärmeenergie zugeführt wird, bevorzugt in den von der Gelenkfeder (2) weiter entfernt liegenden Bereichen.
